(19) Europäisches Patentamt

European Patent Office

Office européen des brevets

(11) Veröffentlichungsnummer: **0 286 010 B1**

(12) **EUROPÄISCHE PATENTSCHRIFT**

(45) Veröffentlichungstag der Patentschrift: **12.02.92**

(51) Int. Cl.⁵: **B23B 13/12**

(21) Anmeldenummer: **88105228.6**

(22) Anmeldetag: **31.03.88**

(54) **Materialstangen-Zentrierring für Drehmaschinen.**

(30) Priorität: **04.04.87 DE 3711437**

(43) Veröffentlichungstag der Anmeldung:
**12.10.88 Patentblatt 88/41**

(45) Bekanntmachung des Hinweises auf die
Patenterteilung:
**12.02.92 Patentblatt 92/07**

(84) Benannte Vertragsstaaten:
**CH DE ES GB IT LI**

(56) Entgegenhaltungen:
**DE-A- 2 930 310**
**DE-C- 717 362**
**US-A- 4 037 733**

(73) Patentinhaber: **INDEX-WERKE GMBH & CO. KG
HAHN & TESSKY**
**Plochinger Strasse 92**
**W-7300 Esslingen(DE)**

(72) Erfinder: **Link, Helmut Friedrich**
**Obere Burgstrasse 43**
**W-7307 Aichwald 1(DE)**
Erfinder: **Trautmann, Günther**
**Bosslerstrasse 7**
**W-7312 Kirchheim-Nabern(DE)**

(74) Vertreter: **Hoeger, Stellrecht & Partner**
**Uhlandstrasse 14 c**
**W-7000 Stuttgart 1(DE)**

## Beschreibung

Die Erfindung betrifft einen Materialstangen-Zentrierring für einen Einbau hinter einer mit einer Materialstangen-Spannvorrichtung versehenen hohlen Arbeitsspindel einer Drehmaschine.

Für die Führung und den Vorschub von Materialstangen zu den Arbeitsspindeln von Drehmaschinen werden in grossem Umfang sogenannte Hydroführungsrohre eingesetzt, die einen hydraulisch verschiebbaren, mit einem Kolben versehenen Materialstangenschieber aufweisen, mit dem eine Materialstange längs des Hydroführungsrohrs in Richtung auf die Spannvorrichtung der betreffenden Arbeitsspindel vorgeschoben werden kann. Lässt sich der Kopf des Materialstangenschiebers bis zur Spannvorrichtung der hohlen Arbeitsspindel vorschieben, so können die Materialstangen vollständig aufgearbeitet werden. Der Raum zwischen dem Führungsrohr und der Materialstange ist mit Öl gefüllt, welches infolge der rotierenden Materialstange einen hydrodynamischen Lagerungseffekt bewirkt und so die Materialstange zentrisch im Führungsrohr hält. Aus wirtschaftlichen Gründen ist es nun unmöglich, für jeden Materialstangendurchmesser das im Durchmesser passende Führungsrohr bereitzustellen, so dass in der Praxis Führungsrohre verwendet werden, deren Durchmesser bis zu 20 oder gar 30 mm grösser ist als der Materialstangendurchmesser. Wenn nun eine Materialstange nur in der Spannvorrichtung der Arbeitsspindel und im Kopf des Materialstangenschiebers mechanisch zentrisch gehalten wird, kann dies wegen der noch zu schildernden Gründe trotz der Ölfüllung des Führungsrohrs gravierende Nachteile zur Folge haben: Da das Öl aus dem Führungsrohr trotz ständigen Nachpumpens am vorderen offenen Ende des Führungsrohrs abfliesst, wird die Materialstange in dessen vorderem Bereich nicht mehr zentriert; insbesondere Vier- und Sechskant-Materialstangen drängen in diesem Bereich das Öl an die Wandung des Führungsrohrs, so dass es die Materialstange nicht mehr zentrieren kann. Deshalb kann man davon ausgehen, dass ungefähr die vorderen 500 mm des Führungsrohrs keine nennenswerte Führung der Materialstange mehr ergeben (hinzu tritt noch die Länge einer Auffangschale für das ausfliessende Öl und ggf. auch noch die Länge eines Ölabstreifers). Die mangelhafte oder gar nicht gegebene Führung und Zentrierung der Materialstange auf einer so grossen Länge bewirkt aber einen unruhigen und geräuschvollen Lauf der Materialstange und eine Qualitätsminderung der hergestellten Drehteile, was zur Reduzierung der Werkstückdrehzahl zwingt. Ein weiterer Nachteil der Hydroführungsrohre, in denen eine Materialstange nur von der Spannvorrichtung der Arbeitsspindel und dem Kopf des Materialstangenschiebers gehalten wird, zeigt sich dann, wenn die Arbeitsspindel und damit die Materialstange stillgesetzt wird, beispielsweise um an einem Werkstück zu fräsen oder dieses mit Querbohrungen zu versehen; dann hängt nämlich eine lange und schwere Materialstange aufgrund der Schwerkraft zwischen der Spannvorrichtung der Arbeitsspindel und dem Kopf des Materialstangenschiebers nach unten durch, da die Zentrierwirkung der Ölfüllung des Hydroführungsrohrs fehlt. Dieses Durchhängen bewirkt wiederum aufgrund der gewaltigen Hebelwirkung geringe Verlagerungen der Materialstange auch im Bereich der Spannvorrichtung der Arbeitsspindel, worunter die Rundlaufgenauigkeit der hergestellten Teile leidet.

Im Stand der Technik finden sich zwei Verbesserungen der geschilderten bekannten Hydroführungsrohre, mit denen versucht wurde, die geschilderten Nachteile zu beseitigen:

Bei der ersten bekannten Konstruktion ist vor der Arbeitsspindel, d.h. am vorderen Ende des Führungsrohrs, eine selbstzentrierende Rollenlünette angeordnet, welche eine runde Materialstange exakt führen kann. Der sich der Lünette nähernde Kopf des Materialstangenschiebers löst ein Steuersignal aus, welches ein Aufspringen der Lünette bewirkt, so dass der Schieberkopf durch die Lünette hindurchgeschoben werden kann. Gerade bei Materialstangen mit einem nicht kreisrunden Querschnitt, bei denen die bekannten Hydroführungsrohre zu den grössten Nachteilen führen, lässt sich eine solche Rollenlünette aber nicht verwenden. Auch nicht eingesetzt werden kann eine solche Rollenlünette bei Mehrspindel-Drehautomaten mit sechs Arbeitsspindeln, da die relativ nahe beieinander angeordneten Arbeitsspindeln es unmöglich machen, die Lünetten und ihre Betätigung räumlich unterzubringen; ausserdem ist die Energie- und Signalzuführung zu sechs auf der rotierenden Spindeltrommel des Drehautomaten sitzenden Lünetten praktisch unmöglich.

Günstiger ist schon das unter der Bezeichnung HYDRO-SAMECA von der Firma SAMECA S.A., CH-2500 Biel, angebotene Hydroführungsrohr, das an seinem vorderen, der Arbeitsspindel zugewandten Ende eine konzentrisch zur Achse des Führungsrohrs und der Arbeitsspindel gelagerte Büchse besitzt, in die von vorn zwei halbringförmige Zentriersegmente eingesetzt werden, welche eine dem Materialstangenquerschnitt entsprechende Führungsöffnung umfassen und durch den von hinten kommenden Kopf des Materialstangenschiebers nach vorn aus der Büchse ausgeworfen werden können. Diese bekannte Konstruktion besitzt also einen Materialstangen-Zentrierring der eingangs erwähnten Art. Ein wesentlicher Nachteil dieser bekannten Konstruktion ist darin zu sehen, dass nach dem Belanden des Führungsrohrs mit einer neuen Materialstange die beiden Zentriersegmente von Hand wieder in die Büchse eingesetzt werden müssen, was bei Stangenlademagazinen nicht möglich ist.

Schliesslich ist ein Materialstangen-Zentrierring bekannt geworden (DE-OS 29 30 310), welcher mehrere, um die Drehachse herum angeordnete Zentrierbacken aufweist, die als abgewinkelte Hebel ausgebildet und an einer drehbaren Hülse mit in ihrer Wirkstellung radial nach aussen weisenden Schenkeln derart schwenkbeweglich angebracht sind, daß die Schwenkachsen quer zur Drehachse verlaufen. Die in Wirkstellung der Zentrierbacken parallel zur Drehachse verlaufenden Schenkel werden von einer Ringschraubenfeder umfasst, gegen deren Wirkung sich die Zentrierbacken mittels eines Rohrs aufschwenken lassen, welches in Vorschubrichtung einer Materialstange in die die Zentrierbacken lagernde drehbare Hülse hineinragt und von hinten innerhalb der Schwenkachsen der Zentrierbacken gegen letztere anlegbar ist, um den von den Zentrierbacken gebildeten Zentrierring aufzustossen, wenn die die Zentrierbacken tragende drehbare Hülse durch einen Hebelmechanismus nach hinten gezogen wird. In ihrer Wirkstellung ragen die Zentrierbacken von hinten in eine auf das hintere Ende der hohlen Arbeitsspindel aufgesteckte Buchse hinein, aus der sie vor dem Öffnen des Zentrierrings beim Zurückziehen der die Zentrierbacken haltenden drehbaren Hülse nach hinten herausgezogen werden. Dieser bekannte Materialstangen-Zentrierring und seine Betätigungsvorrichtung weisen eine Vielzahl von Teilen auf, ausserdem benötigt diese bekannte Konstruktion verhältnismässig viel Platz und ist für Mehrspindel-Drehmaschinen gänzlich ungeeignet, und schliesslich benötigt man für die Betätigung der die Zentrierbacken haltenden drehbaren Hülse eine Abtastvorrichtung an der Ladeeinheit der Materialstangenführung für die Drehmaschine.

Der Erfindung lag nun die Aufgabe zugrunde, eine Materiastangen-Zentriervorrichtungzu schaffen, durch die sich eine Materialstange am Eingang, d.h. am rückwärtigen Ende, einer hohlen Arbeitsspindel einer Drehmaschine nochmals genau zentrieren und führen lässt, die aber wesentlich einfacher aufgebaut ist als die Zentriervorrichtung nach der DE-OS 29 30 310 und keine Steuerung für das Öffnen der Zentriervorrichtung benötigt, so daß sie sich auch für Mehrspindel-Drehautomaten eignet.

Zur Lösung dieser Aufgabe wird von einer Vorrichtung ausgegangen, wie sie die DE-OS 29 30 310 zeigt, d.h. von einem Materialstangen-Zentrierring für einen Einbau hinter einer mit einer Materialstangen-Spannvorrichtung versehenen hohlen Arbeitsspindel einer Drehmaschine, mit einem um die Arbeitsspindelachse drehbaren ringförmigen Halter und mehreren um die Drehachse herum angeordneten Zentrierbacken, die an ihren radial inneren Enden der Materialstangen-Querschnittsform angepasste innere Stirnseiten aufweisen, welcher in einer der Zentrierung und Führung einer Materialstange dienenden Wirkstellung konzentrisch zur Drehachse angeordnet und gegen den Materialstangenumfang anlegbar sind, wobei die als Hebel ausgebildeten Zentrierbacken am Halter derart schwenkbeweglich angebracht sind, daß deren Schwenkachsen quer zur Halterdrehachse verlaufen und die inneren Zentrierbackenenden in axialer Richtung und radial nach aussen auslenkbar sind, wobei ferner mit einer Kraftspeicher versehene Rückstellvorrichtungen zum Zurückschwenken ausgelenkter Zentrierbacken in ihre Wirkstellung vorgesehen sind, und wobei die axialen Stirnseiten der Zentrierbacken so ausgebildet sind und die Schwenkachsen einen solchen Abstand von der Drehachse aufweisen, daß die ausgelenkten Zentrierbacken eine Durchtrittsöffnung für das vordere Ende eines Materialstangenschiebers bilden, Erfindungsgemäss soll eine solche Zentriervorrichtung so ausgebildet werden, daß die Zentrierbacken aus ihrer Wirkstellung durch den Materialstangenschieber in beiden Richtung der Drehachse entgegen der Wirkung von Kraftspeichern frei aufschwenkbar und in Abwesenheit des Materialstangenschiebers frei rückschwenkbar sind. Die erfindungsgemässe Zentriervorrichtung benötigt also keine separate Betätigungsvorrichtung für die Zentrierbacke und damit auch keine Steuerung für diese Betätigungsvorrichtung, da die Zentrierbacken durch den von hinten kommenden, d.h. in Vorschubrichtung sich dem Zentrierring nähernden Kopf des Materialstangenschiebers aufgestossen werden, so daß dieser den Zentrierring passieren kann; gleiches erfolgt, wenn der Kopf des Materialstangenschiebers entgegen der Vorschubrichtung nach hinten durch den Zentrierring hindurchgezogen wird, worauf die Zentrierbacken unter der Wirkung der Kraftspeicher in ihre Wirkstellung zurückspringen. Besitzt der Materialstangenschieber keinen Kopf, d.h. überall denselben Querschnitt (was allerdings normalerweise nicht der Fall ist), so müssen die Zentrierbacken nicht in beiden axialen Richtungen auslenkbar sein; in diesem Fall zeichnet sich der erfindungsgemässe Zentrierring dadurch aus, daß die Zentrierbacken durch den Materialstangenschieber in Vorschubrichtung entgegen der Wirkung der Kraftspeicher frei aufschwenkbar und in Abwesenheit des Materialstangenschiebers frei rückschwenkbar sind. In jedem Fall besitzt die erfindungsgemässe Zentriervorrichtung nur wenige bewegliche Teile und ist ausserordentlich kompakt, so daß sie sich auch in Mehrspindel-Drehmaschinen einbauen lässt, vor allem weil die erfindungsgemäss Zentriervorrichtung keine Betätigungsvorrichtung für die Zentrierbacken und damit auch keine Steuerung für eine solche Betätigungsvorrichtung benötigt. Selbstverständlich eignet sich der erfindungsgemässe Zentrierring auch für die Verarbeitung von Profilmaterialstangen und für einen Einsatz in Verbindung mit einem Stangenlademagazin. Wegen seines kompakten Aufbaus lässt sich der erfindungsgemässe Zentrierring auch bei Mehrspindel-Drehautomaten an der zugeordneten Arbeitsspindel oder kurz vor deren Eingang anordnen, so daß er sich synchron mit der Arbeitsspindel drehen kann. Er gewährleistet auch ohne irgendeinen Mehraufwand das automatische Einführen von Profilmaterialstangen mit der richtigen Orientierung in eine an das Materialstangenprofil angepasste Spannvorrichtung der Arbeitsspindel, d.h. in eine sog. Profilspannzange, denn der erfindungsgemässe Zentrierring lässt sich ohne weiteres mit den Zentrierbacken bestücken, deren innere Stirnenden an die Materialstangen-Querschnittsform angepasst sind, und aufgrund der selbsttätig in ihre Wirkstellung springenden Zentrierbacken führt der Zentrierring automatisch zu einer Zentrierung und exakten Orientierung einer neuen Profilmaterialstange in der Arbeitsspindel; auch müssen die Enden der Materialstangen nicht vorbearbeitet werden, und der nicht mehr aufarbeitbare Rest einer Materialstange ist ausserordentlich kurz. Zum Einfädeln einer neuen Materialstange in den Zentrierring und damit in die Arbeitsspindel genügt es, die letztere mit geringer Drehzahl laufen zu lassen, wenn die Materialstange am Zentrierring ankommt, oder aber die Arbeitsspindel zuvor anzuhalten und sie dann langsam anlaufen zu lassen.

Die inneren Stirnseiten der Zentrierbacken könnten - im Axialschnitt durch die Drehachse des Halters - ballig ausgebildet sein, was in Kombination mit einer federnden Rückstellvorrichtung gewährleisten würde, daß die Zentrierbacken einerseits ihre Führungs- und Zentrierfunktion übernehmen können und sich andererseits zur Öffnung des Zentrierrings durch den Schieberkopf auslenken lassen.

Bei einer bevorzugten Ausführungsform des erfindungsgemässen Zentrierrings besitzen die Zentrierbacken jedoch Führungsflächen für die Materialstangen, wobei in der Wirkstellung der Zentrierbacken die Führungsflächen parallel zum Materialstangenumfang verlaufen, und die Zentrierbacken sind so ausgelegt, dass sie in der Wirkstellung die Materialstange mit geringem radialem Spiel zwischen sich aufnehmen. Dabei empfiehlt es sich, die Konstruktion so auszubilden, dass die Erstreckung der an den Zentrierbacken ausgebildeten Führungsflächen von der von den Schwenkachsen definierten, senkrecht zur Drehachse verlaufenden Ebene entgegen der Vorschubrichtung der Materialstange, d.h. nach hinten, so gross ist, dass bei jedem Hebel - in einer senkrecht zu dessen Schwenkachse sowie durch die Drehachse des Halters verlaufenden Ebene - der von der Drehachse zur Schwenkachse verlaufende Radius mit der Verbindungslinie von der Schwenkachse zur hinteren Begrenzung der Führungsfläche einen spitzen Winkel bildet, welcher mindestens ungefähr dem Reibungswinkel entspricht, um sicherzustellen, dass infolge der Vorschubbewegung der Materialstange - selbst bei grösster Anpresskraft zwischen einer Zentrierbacke und der Materialstange - die Zentrierbacken nicht aufgrund der Reibung aus ihrer Wirkstellung heraus verschwenkt werden.

Eine besonders einfach aufgebaute Rückstellvorrichtung, mit der sich auch jede beliebige Rückstellmoment-Charakteristik erzielen lässt, weist eine Feder, eine Kurve und einen Kurvenabtaster auf, wobei die beiden letzteren durch Verschwenken einer Zentrierbacke aus ihrer Wirkstellung relativ zueinander bewegbar sind und eine Spannvorrichtung für die Feder bilden. Man muss dann nur die Kurve entsprechend gestalten, um eine bestimmte gewünschte Rückstellmoment-Charakteristik zu erhalten.

Die Kurven könnten z.B. an den Zentrierbacken selbst ausgebildet sein, und bei den Kurvenabtastern könnte es sich um gefederte Rollen, Kugeln oder dergleichen handeln. Besonders einfach und funktionssicher wird die Konstruktion aber dann, wenn die Schwenkachsen von am Halter drehbar gelagerten Hohlwellen gebildet werden, an denen die Zentrierbacken befestigt sind, und wenn jede Hohlwelle eine Druckfeder aufnimmt, welche einen den Kurvenabtaster bildenden Querstift in Richtung der Schwenkachse gegen die Kurve gepresst hält, von denen (Kurve und Querstift) das eine mit dem Halter und das andere mit der betreffenden Zentrierbacke drehfest verbunden ist. So könnte die Hohlwelle zum Beispiel am einen Ende geschlossen sein und die Feder gegen einen in der Mitte der Hohlwelle in Längsschlitzen verschiebbar gehaltenen Querstift anliegen, welcher seinerseits gegen eine Halter-feste Kurve anliegt. Es wäre aber auch möglich, mit der Druckfeder ein in der Hohlwelle axial verschiebbar, jedoch unverdrehbar gehaltenes Kurvenstück gegen einen Halter-festen Querstift zu pressen. Ein besonders wirksames Rückstellmoment ergibt sich dann, wenn die Hohlwelle mit beiden Enden in am Halter befestigten Hülsen gelagert ist, deren einander zugewandte Stirnseiten jeweils eine Kurve bilden, und wenn die Hohlwelle im Bereich ihrer beiden Enden in Richtung der Schwenkachse verlaufende Schlitze besitzt, die von zwei von der Druckfeder gegen die Kurven gepressten Querstiften durchgriffen werden.

Schliesslich empfiehlt es sich, dass die Feder der Rückstellvorrichtung schon in der Wirkstellung der betreffenden Zentrierbacke vorgespannt ist und die Kurve eine Rastvertiefung aufweist, in die der Kurvenabtaster in der Wirkstellung der betreffenden Zentrierbacke unter der Wirkung der Feder einfällt, um so eine wohldefinierte Wirkstellung der Zentrierbacken und von Anfang einer Auslenkung an hohe Rückstellmomente zu schaffen.

Weitere Merkmale, Vorteile und Einzelheiten der Erfindung ergeben sich aus der beigefügten zeichnerischen Darstellung und der nachfolgenden Beschreibung einer besonders vorteilhaften Ausführungsform der erfindungsgemässen Materialstangen-Zentriereinrichtung; in der Zeichnung zeigen:

Fig. 1:  einen axialen Schnitt durch den Spindelkasten und die Arbeitsspindel einer Drehmaschine sowie durch das Führungsrohr einer an diese Drehmaschine angebauten Stangenführung, und zwar unmittelbar nach dem Einbringen einer neuen Materialstange in die Spannzange der Arbeitsspindel der Drehmaschine;

Fig. 2:  eine der Fig. 1 entsprechende Darstellung, jedoch nach dem Vorschieben der Materialstange bis in eine Position, in der der Kopf eines Materialstangenschiebers gerade durch den erfindungsgemässen Zentrierring hindurchtritt;

Fig. 3:  eine den Figuren 1 und 2 entsprechende Darstellung, wobei jedoch der Materialstangenschieber in seine vordere Endstellung vorgeschoben wurde und sich der erfindungsgemässe Zentrierring wieder geschlossen hat;

Fig. 4:  den in Fig. 1 mit "A" bezeichneten Ausschnitt in grösserem Maßstab, wobei jedoch der Kopf des Materialstangenschiebers gerade den erfindungsgemässen Zentrierrung erreicht hat;

Fig. 5:  einen Schnitt durch den erfindungsgemässen Zentrierring senkrecht zu dessen Drehachse, und zwar in dem in Fig. 4 gezeigten Zustand;

Fig. 6:  eine Abwicklung des einer Zentrierbacke zugekehrten Endbereichs einer Kurvenhülse zur Lagerung einer eine Zentrierbacke tragenden Hohlwelle, wobei einer der an dieser Hohlwelle unverdrehbar gehaltenen Querstifte gleichfalls dargestellt wurde;

Fig. 7:  eine der Fig. 4 entsprechende Darstellung, jedoch bei durch den Zentrierring hindurchgeschobenem Materialstangenschieberkopf;

Fig. 8:  einen der Fig. 5 entsprechenden Schnitt durch den Zentrierring, jedoch in dem in Fig. 7 gezeigten Zustand, und

Fig. 9:  eine der Fig. 6 entsprechende Abwicklung der Kurvenhülse, wobei der Querstift jedoch diejenige Stellung einnimmt, die dem in den Figuren 7 und 8 gezeigten Zustand des Zentrierrings entspricht.

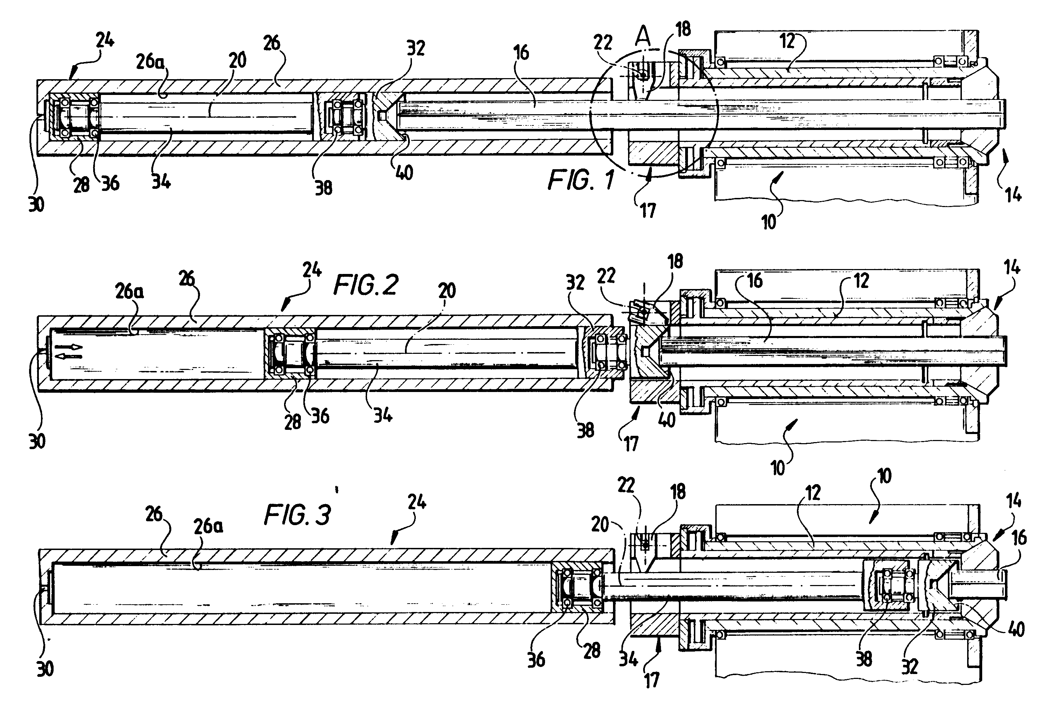

Die Fig. 1 zeigt einen Spindelkasten 10 einer Drehmaschine, in dem eine Arbeitsspindel 12 drehbar gelagert ist. Diese trägt an ihrem vorderen Ende eine Werkstück-Spannvorrichtung in Form einer Profilspannzange 14, weil gemäss der Zeichnung eine Sechskant-Materialstange 16 verarbeitet werden soll.

Erfindungsgemäss ist am hinteren, gemäss Fig. 1 linken Ende der Arbeitsspindel 12 ein Materialstangen-Zentrierring 17 befestigt, dessen Aufbau später noch näher erläutert werden wird. Er besitzt drei als Hebel ausgebildete Zentrierbacken 18, die - in Drehrichtung um eine Drehachse 20 herum - in gleichen Winkelabständen von jeweils 120° angeordnet sind, weshalb die Fig. 1 nur eine Zentrierbacke zeigt. Sie ist um eine Schwenkachse 22 gemäss Fig. 1 in beiden axialen Richtungen um etwas weniger als 90° schwenkbar.

Eine koaxial mit der Drehachse 20 angeordnete Stangenvorschubeinrichtung 24 umfasst ein Führungsrohr 26, welches gleichzeitig einen Druckmittelzylinder für einen Kolben 28 bildet, hinten, d.h. gemäss Fig. 1 links, bis auf eine Öleinlass- und Auslassöffnung 30 verschlossen und vorn, d.h. rechts, offen ist. Die Bohrung 26a des Führungsrohrs 26 ist kreiszylindrisch, und in ihr ist ein im Führungsrohr 26 drehbarer Schieberkopf 32 längsverschiebbar geführt. Eine Kolbenstange 34 ist einerseits im Kolben 28 drehbar gelagert und dient andererseits der Lagerung des Schieberkopfs 32 - entsprechende Wälzlager wurden mit 36 und 38 bezeichnet.

An seiner Vorderseite besitzt der Schieberkopf 32 eine zur Drehachse 20 konzentrische Zentrierausnehmung 40, in die die Materialstange 16 eingreift, so dass letztere durch den Schieberkopf 32 bezüglich der Drehachse 20 zentriert wird; am anderen Ende der Materialstange dient die Profilspannzange 14 der Zentrierung, und erfingungsgemäss wird die Materialstange 16 am Eingang der Arbeitsspindel 12 noch einmal zentriert und geführt, u.z. durch den Zentrierring 17.

Wenn der Raum zwischen der Einlass-/Auslassöffnung 30 und dem Kolben 28 mit Drucköl beaufschlagt wird, verschiebt der sich mit der Materialstange 16 drehende Schieberkopf 32 erstere gemäss den Figuren 1 bis 3 nach rechts, d.h. nach vorn in Richtung auf die Spannzange 14; die Rückstellung des Kolbens 28 in seine in Fig. 1 gezeigte Ausgangstellung kann auf beliebige und bekannte Weise erfolgen.

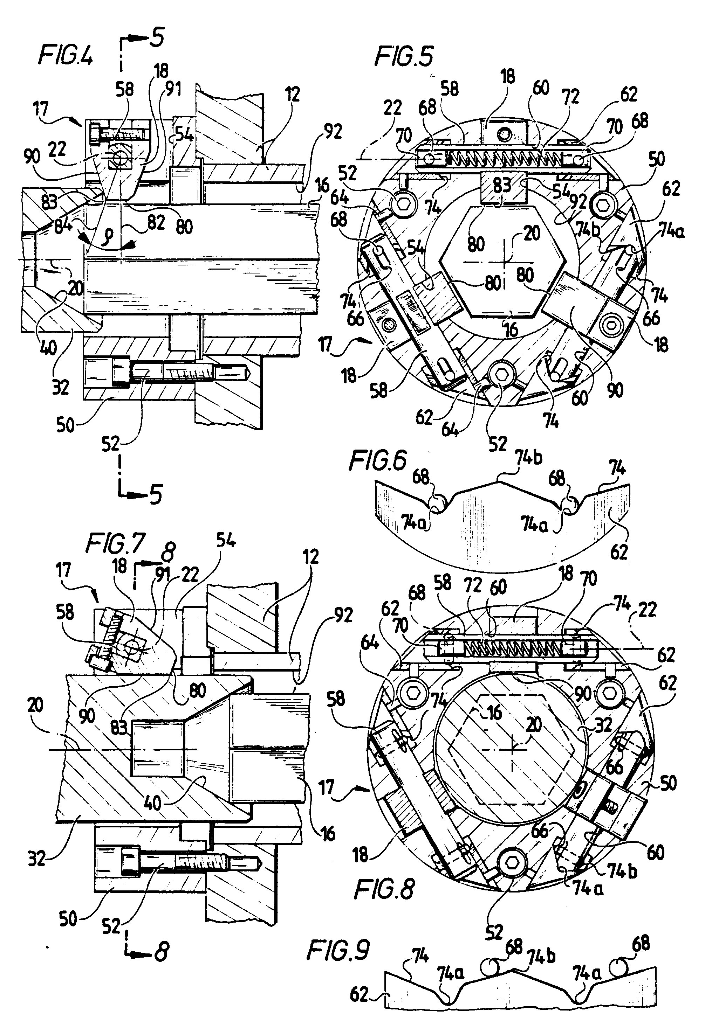

Der Aufbau des erfindungsgemässen Zentrierrings 17 soll nun anhand der Figuren 4 bis 6 näher erläutert werden.

Der Zentrierring besitzt einen kreisringförmigen Halter 50, der mit drei Befestigungsschrauben 52 an der Arbeitsspindel 12 montiert wurde. In drei um jeweils 120° gegeneinander versetzten Ausnehmungen 54, die die Form radialer Schlitze haben, ist jeweils eine als Hebel ausgebildete Zentrierbacke 56 angeordnet, deren jede auf einer Hohlwelle 58 festgeklemmt ist. Die letztere besitzt im Bereich der Zentrierbacke einen ungefähr quadratischen Querschnitt, um so auch einen Formschluss zwischen Hohlwelle und Zentrierbacke herbeizuführen. Für jede Hohlwelle ist im Halter 50 eine Querbohrung 60 vorgesehen, in der und von Erweiterungen der Querbohrung 60 aufgenommenen Hülsen 62 die Hohlwelle 58 drehbar gelagert ist. Der Sicherung der Hülsen 62 im Halter 50 gegen Verdrehen und gegen axiales Verschieben dienen Sicherungsstifte 64

Die Endbereiche der Hohlwelle sind mit Langlöchern 66 versehen, durch die Querstifte 68 hindurchgreifen; diese Querstifte sind in Kolben 70 befestigt, die in der Hohlwelle 58 verschiebbar geführt sind und Widerlager für eine in der Hohlwelle angeordnete Druckfeder 72 bilden. Letztere ist also bestrebt, die Querstifte 68 gegen die äusseren Enden der Langlöcher 66 anzulegen.

Die einander zugewandten inneren Stirnseiten der beiden zu einer Hohlwelle 58 gehörenden Hülsen 62 bilden Kurven 74, gegen die die Querstifte 68 unter der Wirkung der Druckfeder 72 anliegen, und wie die Figuren 5 und 6 deutlich erkennen lassen, bilden diese Kurven jeweils zwei Rastvertiefungen 74a und zwei dazwischenliegende Erhebungen 74b, wobei die Zentrierbacken 56 ihre in den Figuren 4 und 5 gezeigte Wirkstellung einnehmen, wenn die Querstifte 68 in den Rastvertiefungen 74a liegen. Die Länge und Lage der Langlöcher 66 muss natürlich so gewählt werden, dass die Querstifte 68 den Kurven 74 folgen können.

Erfindungsgemäss bilden die radial inneren Stirnseiten der Zentrierbacken 56 Führungsflächen 80, deren Profil im Axialschnitt durch die Drehachse 20, wie die Fig. 4 zeigt, eben ist und parallel zur Drehachse 20 verläuft und im Schnitt senkrecht zur Drehachse 20 der Querschnitts, form der Materialstange angepasst ist, so wie dies die Fig. 5 erkennen lässt. Im Falle des dargestellten Sechskantmaterials haben die Führungsflächen 80 also die Form von Ebenen, soll Rundmaterial, d.h. eine kreiszylindrische Materialstange, geführt und zentriert werden, so bildeten die Führungsflächen 80 im Schnitt senkrecht zur Drehachse 20 zu dieser konzentrische Kreisbögen.

Nach einem weiteren Merkmal der Erfindung umfassen die Führungsflächen 80 die Materialstange 16 mit geringem radialem Spiel, das jedoch nicht grösser als ca. 2 bis 3 mm sein sollte.

Ferner empfiehlt sich eine Bemessung der Führungsflächen 80 in Richtung der Drehachse 20 wie folgt: Zieht man von der Drehachse 20 den Radius 82 zur Mitte der Schwenkachse 22 und verbindet diese ausserdem mit dem hinteren Rand 83 der Führungsfläche 80 durch die Linie 84, so sollte der Winkel $\rho$, den der Radius 82 und die Linie 84 miteinander bilden, nicht kleiner als der Reibungswinkel sein, damit auch bei stärkstem Anpressdruck der Materialstange gegen eine Zentrierbacke diese durch den Vorschub der Materialstange gemäss Fig. 4 von links nach rechts nicht im Gegenuhrzeigersinn verschwenkt werden kann. Erfindungsgemäß ist aber die Erstreckung der Führungsfläche 80 vom Radius 82 nach vorn wesentlich geringer.

Solange die Materialstange 16 durch die Zentrierbacken 56 geführt und bezüglich der Drehachse 20 zentriert wird, werden die Zentrierbacken durch die Querstifte 68 und die Rastvertiefungen 74a der Kurven 74 in ihren in den Fig. 4 und 5 dargestellten Wirkstellungen gehalten. Stösst nun der Schieberkopf 32 gegen die Zentrierbacken, ein Zustand, den die Fig. 4 zeigt, und wird dann der Schieberkopf weiter vorgeschoben, so verschwenkt er die Zentrierbacken und öffnet so den Zentrierring 17 dergestalt, dass dieser eine Öffnung bildet, die für den Durchtritt des Schieberkopfs 32 gross genug ist. Dies setzt voraus, dass die Rückseiten 90 der Zentrierbacken erfindungsgemäss so ausgebildet bzw. bezüglich der Schwenkachsen 22 so angeordnet sind, dass sie bei aufgeschwenkten Zentrierbacken (sh. die Fig. 7 und 8) eine Durchtrittsöffnung definieren, deren Durchmesser mindestens gleich gross wie der Aussendurchmesser des Schieberkopfs 32 ist; wie sich aus Fig. 8 ergibt, fällt diese Durchtrittsöffnung zweckmässigerweise mit einer vom kreisringförmigen Halter 50 definierten Durchtrittsöffnung 92 zusammen.

Werden die Zentrierbacken 56 durch den Schieberkopf 32 aufgeschwenkt, so gleiten die Querstifte 68 aus den Rastvertiefungen 74a heraus und auf die Erhebungen 74b hinauf, u.z. entgegen der Wirkung der Druckfedern 72. Diese erzeugen deshalb zusammen mit den Kurven 74 ein Rückstelldrehmoment, das die Zentrierbacken in ihre in Fig. 4 gezeigte Wirkstellung zurückschwenken lässt, sobald der Schieberkopf 32 den Zentrierring 72 passiert hat (sh. Fig.3).

Beim Zuführen einer neuen Materialstange 16 bei zunächst stillstehender Arbeitsspindel 12 schwenkt die Materialstange die gerade unten liegenden Zentrierbacken 18 nach vorn und aussen. Lässt man dann die Arbeitsspindel langsam anlaufen, wandert eine zuvor oben gelegene und sich in ihrer Wirkstellung befindliche Zentrierbacke 18 unter die Materialstange und hebt diese an, während die zuvor unten gelegenen Zentrierbacken in ihre Wirkstellung springen und so die Materialstange 16 zentrieren. Diejenige Zentrierbacke 18, die die Materialstange unterwandert hat, kann wegen ihrer Rückstellvorrichtung und des Reibungswinkels 9 durch die sich vorschiebende Materialstange nicht umgeklappt werden.

Wird der Schieberkopf 32 aus seiner in Figur 3 gezeigten vorderen Endstellung wieder in seine in Figur 1 gezeigte Ausgangsstellung zurückgezogen, schwenkt er die Zentrierbacken 18 nach links und tritt durch den Zentrierring 17 hindurch. Zu diesem Zweck sind die Vorderseiten 91 der Zentrierbacken 18 so ausgebildet, daß sie bei aufgeschwenkten Zentrierbacken eine Durchtrittsöffnung definieren, deren Durchmesser mindestens so gross wie der Durchmesser des Schieberkopfs 32 ist.

Da die Zentrierbacken nur dem Aufschwenken durch die in Richtung auf die Arbeitsspindel 12 vorgeschobene Materialstange 16 Widerstand leisten müssen, ist die gemäß den Figuren 6 und 9 rechte Flanke der Rastvertiefungen 74a höher als die linke Flanke, d.h. das einer Auslenkung der Zentrierbacken aus deren Wirkstellung in Vorschubrichtung entgegenwirkende Moment ist grösser als das der Auslenkung in umgekehrter Richtung entgegenwirkende Moment.

Wenn die durch den Zentrierring 17 hindurchzuschiebenden Bereiche 32, 34 des Materialstangenschiebers überall denselben Aussendurchmesser aufweisen, genügt es, wenn die Zentrierbacken nur in Vorschubrichtung aufschwenkbar sind, da sie dann von den Materialstangenschieber in der aufgeschwenkten Stellung gehalten werden, bis der Schieberkopf den Zentrierring wieder passiert hat.

**Patentansprüche**

1. Materialstangen-Zentrierring (17) für einen Einbau hinter einer mit einer Materialstangen-Spannvorrichtung (14) versehenen hohlen Arbeitsspindel (12) einer Drehmaschine, mit einem um die Arbeitsspindelachse (20) drehbaren ringförmigen Halter (50) und mehreren um die Drehachse herum angeordneten Zentrierbacken (18, 56), die an ihren radial inneren Enden der Materialstangenquerschnittsform angepasste innere Stirnseiten (80) aufweisen, welche in einer der Zentrierung und Führung einer Materialstange (16) dienenden Wirkstellung konzentrisch zur Drehachse (20) angeordnet und gegen den Materialstangenumfang anlegbar sind, wobei die als Hebel ausgebildeten Zentrierbacken (18, 56) am Halter (50) derart schwenkbeweglich angebracht sind, daß deren Schwenkachsen (22) quer zur Halterdrehachse (20) verlaufen und die inneren Zentrierbackenenden (80) in axialer Richtung und radial nach aussen auslenkbar sind, wobei ferner mit einem Kraftspeicher (72, 74, 68) versehene Rückstellvorrichtungen (58, 62, 74, 68, 72) zum Zurückschwenken ausgelenkter Zentrierbacken (18, 56) in ihre Wirkstellung vorgesehen sind, und wobei die axialen Stirnseiten (80) der Zentrierbacken (18, 56) so ausgebildet sind und die Schwenkachsen (22) einen solchen Abstand von der Drehachse (20) aufweisen, daß die ausgelenkten Zentrierbacken (18, 56) eine Durchtrittsöffnung für das vordere Ende (32) eines Materialstangenschiebers (32, 34) bilden, dadurch gekennzeichnet, daß die Zentrierbacken (18, 56) aus ihrer Wirkstellung durch den Materialstangenschieber (32, 34) in beiden Richtungen der Drehachse (20) entgegen der Wirkung von Kraftspeichern (72, 74, 68) frei aufschwenkbar und in Abwesenheit des Materialstangenschiebers frei rückschwenkbar sind.

2. Zentrierring nach Anspruch 1, dadurch gekennzeichnet, daß die inneren Stirnseiten der Zentrierbacken (56) Führungsflächen (80) für die Materialstange (16) bilden, deren Erstreckung von der von den Schwenkachsen (22) definierten, senkrecht zur Drehachse (20) verlaufenden Ebene entgegen der Vorschubrichtung der Materialstange (16) so gross ist, daß bei jedem Hebel - in einer senkrecht zu dessen Schwenkachse (22) sowie durch die Drehachse (20) verlaufenden Ebene - der von der Drehachse (20) zur Schwenkachse (22) verlaufende Radius (82) mit der Verbindungslinie (84) von der Schwenkachse (22) zur hinteren Begrenzung (83) der Führungsfläche (80) einen spitzen Winkel ( $\rho$ ) bildet, welcher mindestens ungefähr dem Reibungswinkel entspricht.

3. Zentrierring nach Anspruch 1, dadurch gekennzeichnet, daß die Rückstellvorrichtung eine Feder (72), eine Kurve (74) und einen Kurvenabtaster (68) aufweist, wobei die beiden letzteren durch Verschwenken einer Zentrierbacke (56) aus ihrer Wirkstellung relativ zueinander bewegbar sind und eine Spannvorrichtung für die Feder bilden.

4. Zentrierring nach Anspruch 3, dadurch gekennzeichnet, daß die Schwenkachsen (22) von am Halter (50) drehbar gelagerten Hohlwellen (58) gebildet werden, an denen die Zentrierbacken (56) befestigt sind, und daß jede Hohlwelle eine Druckfeder (72) aufnimmt, welche einen den Kurvenabtaster bildenden Querstift (68) in Richtung der Schwenkachse (22) gegen die Kurve (74) gepresst hält, von denen das eine (74) mit dem Halter (50) und das andere (68) mit der betreffenden Zentrierbacke (56) drehfest verbunden ist.

5. Zentrierring nach Anspruch 4, dadurch gekennzeichnet, daß die Hohlwelle (58) mit beiden Enden in am Halter (50) befestigten Hülsen (62) gelagert ist, deren einander zugewandte Stirnseiten jeweils eine Kurve (74) bilden, und daß die Hohlwelle (58) im Bereich ihrer beiden Enden in Richtung der Schwenkachse (22) verlaufende Schlitze (66) besitzt, die von zwei von der Druckfeder (72) gegen die Kurven (74) gepressten Querstiften (68) durchgriffen sind.

6. Zentrierring nach einem oder mehreren der Ansprüche 3 bis 5, dadurch gekennzeichnet, daß die Kurve (74) eine Rastvertiefung (74a) aufweist, in die der Kurvenabtaster (68) in der Wirkstellung der betreffenden Zentrierbacke (56) unter der Wirkung der Feder (72) einfällt.

7. Zentrierring nach Anspruch 2, dadurch gekennzeichnet, daß die axiale Erstreckung der Führungsfläche (80) von der durch die Schwenkachsen (22) definierten Ebene in Vorschubrichtung geringer als in der entgegengesetzten Richtung ist.

8. Zentrierring nach Anspruch 6, dadurch gekennzeichnet, daß die Rastvertiefung (74a) unsymmetrisch ausgebildet ist und in der Auslenkung der Zentrierbacken (56) in Vorschubrichtung entsprechender Bewegungsrichtung des Kurvenabtasters (68) einen höheren Rand besitzt als in der entgegengesetzten Richtung.

**Claims**

1. Centering ring (17) for stock bars for installation behind a hollow work spindle (12) of a lathe provided with a chuck device (14) for the stock bars, comprising an annular holder (50) rotatable about the work spindle axis (20) and a plurality of centering jaws (18, 56) arranged about the axis of rotation, these jaws having at their radially inner ends inner end faces (80) adapted to the cross-sectional shape of the stock bars, these end faces being arranged concentrically to the axis of rotation (20) in an operative position serving to center and guide a stock bar (16) and adapted to engage on the circumference of the stock bar, wherein the centering jaws (18, 56) designed as levers are mounted on the holder (50) for pivoting movement such that their pivot axes (22) extend transversely to the axis of rotation (20) of the holder and the inner centering jaw ends (80) are adapted to be deflected in axial direction and radially outwards, wherein in addition return means (58, 62, 74, 68, 72) provided with a force-generating means (72, 74, 68) are provided for pivoting deflected centering jaws (18, 56) back into their operative position, and wherein the axial end faces (80) of the centering jaws (18, 56) are designed and the pivot axes (22) are spaced from the axis of rotation (20) such that the deflected centering jaws (18, 56) form a passage for the forward end (32) of a stock bar slide (32, 34), characterized in that the centering jaws (18, 56) are adapted to be freely pivoted out of their operative position to widen the passage by the stock bar slide (32, 34) and in both directions of the axis of rotation (20) contrary to the action of force-generating means (72, 74, 68) and are adapted to be freely pivoted back in the absence of the stock bar slide.

2. Centering ring as defined in claim 1, characterized in that the inner end faces of the centering jaws (56) form guide faces (80) for the stock bar (16), the extension of said faces from the plane defined by the pivot axes (22) and extending at right angles to the axis of rotation (20) contrary to the feed direction of the stock bar (16) being of such a size that at each lever - in a plane extending at right angles to its pivot axis (22) as well as through the axis of rotation (20) - the radius (82) extending from the axis of rotation (20) to the pivot axis (22) forms an acute angle ( $\rho$ ) with the connecting line (84) from the pivot axis (22) to the rear limit (83) of the guide face (80), this angle corresponding at least approximately to the angle of friction.

3. Centering ring as defined in claim 1, characterized in that the return means comprises a spring (72), a cam (74) and a cam follower (68), the last two elements being movable relative to one another due to pivoting of a centering jaw (56) out of its operative position and forming a tensioning means for the spring.

4. Centering ring as defined in claim 3, characterized in that the pivot axes (22) are formed by hollow shafts (58) rotatably mounted on the holder (50), the centering jaws (56) being attached to said shafts, and that each hollow shaft accommodates a pressure spring (72), said spring keeping a transverse pin (68) forming the cam follower pressed against the cam (74) in the direction of the pivot axis (22), the one element (74) being non-rotatably connected with the holder (50) and the other (68) with the relevant centering jaw (56).

5. Centering ring as defined in claim 4, characterized in that the hollow shaft (58) is mounted with both ends in sleeves (62) attached to the holder (50), the facing end faces of said sleeves each forming a cam (74), and that the hollow shaft (58) has in the region of its two ends slits (66) extending in the direction of the pivot axis (22), two transverse pins (68) pressed by the pressure spring (72) against the cams (74) engaging through said slits.

6. Centering ring as defined in one or more of claims 3 to 5, characterized in that the cam (74) has a stop recess (74a), the cam follower (68) dropping into said recess due to the action of the spring (72) in the operative position of the relevant centering jaw (56).

7. Centering ring as defined in claim 2, characterized in that the axial extension of the guide face (80) from the plane defined by the pivot axes (22) is smaller in the feed direction than in the opposite direction.

8. Centering ring as defined in claim 6, characterized in that the stop recess (74a) is designed to be unsymmetrical and has a higher edge in the direction of movement of the cam follower (68), corresponding to the deflection of the centering jaws (56) in the feed direction, than in the opposite direction.

**Revendications**

1. Anneau de centrage (17) de barres à monter derrière une broche motrice creuse (12) d'un tour qui est pourvue d'un dispositif de serrage de barres (14), comprenant un support annulaire (50) capable de tourner autour de l'axe (20) de la broche motrice et plusieurs mâchoires de centrage (18, 56) qui sont agencées tout autour de l'axe de rotation et qui, à leurs extrémités radialement internes, présentent des côtés frontaux internes (80) qui sont adaptés à la forme de la section transversale des barres, sont agencés concentriquement à l'axe de rotation (20) dans une position active servant au centrage et au guidage d'une barre (16) et peuvent être appliqués contre la périphérie des barres, les mâchoires de centrage (18, 56) réalisées sous la forme de leviers étant agencées sur le support (50) de manière à pouvoir pivoter de façon que leurs axes de pivotement (22) s'étendent transversalement à l'axe de rotation du support (20) et que les extrémités internes (80) des mâchoires de centrage puissent être déviées en direction axiale et radialement vers l'extérieur, des dispositifs de rappel (58, 62, 74, 68, 72) pourvus d'un accumulateur d'énergie (72, 74, 68) étant prévus pour ramener par pivotement dans leur position active des mâchoires de centrage (18, 56) déviées, les côtés frontaux axiaux (80) des mâchoires de centrage (18, 56) présentant une réalisation telle et les axes de pivotement (22) une distance par rapport à l'axe de rotation (20) telle que les mâchoires de centrage (18, 56) déviées forment une ouverture de passage pour l'extrémité avant (32) d'un poussoir de barres (32, 34), caractérisé en ce que les mâchoires de centrage (18, 56) sont capables de pivoter librement en dehors de leur position active par le poussoir de barres (32, 34) dans les deux sens de l'axe de rotation (20), à l'encontre de l'action d'accumulateurs d'énergie (72, 74, 68) et en ce qu'elles sont capables de pivoter en arrière librement en l'absence du poussoir de barres.

2. Anneau de centrage suivant la revendication 1, caractérisé en ce que les côtés frontaux internes des mâchoires de centrage (56) forment des surfaces de guidage (80) pour la barre (16), dont l'extension à partir du plan, qui est défini par les axes de pivotement (22) et qui s'étend perpendiculairement à l'axe de rotation (20), est, dans le sens opposé au sens d'avancement de la barre (16), suffisamment grande pour que, pour chaque levier, dans un plan perpendiculaire à son axe de pivotement (22) et passant par l'axe de rotation (20), le rayon (82), qui s'étend de l'axe de rotation (20) à l'axe de pivotement (22), forme avec la ligne de liaison (84) entre l'axe de pivotement (22) et la limite arrière (83) de la surface de guidage (80) un angle aigu ($\rho$) qui correspond au moins approximativement à l'angle de frottement.

3. Anneau de centrage suivant la revendication 1, caractérisé en ce que le dispositif de rappel comporte un ressort (72), une came (74) et un suiveur de came (68), les deux derniers pouvant être déplacés l'un par rapport à l'autre par pivotement d'une mâchoire de centrage (56) en dehors de sa position active et formant un dispositif de serrage pour le ressort.

4. Anneau de centrage suivant la revendication 3, caractérisé en ce que les axes de pivotement (22) sont formés par des arbres creux (58) qui sont supportés de manière à pouvoir tourner sur le support (50) et sur lesquels les mâchoires de centrage (56) sont fixées, et en ce que chaque arbre creux reçoit un ressort de pression (72) qui maintient une goupille transversale (68) formant le suiveur de came pressée contre la came (74) suivant la direction de l'axe de pivotement (22), l'un de ces éléments (74) étant relié de manière fixe en rotation au support (50) et l'autre (68) à la mâchoire de centrage (56) concernée.

5. Anneau de centrage suivant la revendication 4, caractérisé en ce que l'arbre creux (58) est, aux deux extrémités, supporté dans des douilles (62) qui sont fixées sur le support (50) et dont les côtés frontaux tournés l'un vers l'autre forment chacun une came (74), et en ce que l'arbre creux (58) possède, dans la zone de ses deux extrémités, des fentes (66) qui s'étendent suivant la direction de l'axe de pivotement (22) et qui sont traversées par deux goupilles transversales (68) pressées par le ressort de pression (72) contre les cames (74).

6. Anneau de centrage suivant une ou plusieurs des revendications 3 à 5, caractérisé en ce que la came (74) présente un évidement (74a) dans lequel le suiveur de came (68) s'engage sous l'action du ressort (72) dans la position active de la mâchoire de centrage (56) concernée.

7. Anneau de centrage suivant la revendication 2, caractérisé en ce que l'extension axiale de la surface de guidage (80) est, depuis le plan défini par les axes de pivotement (22), plus petite dans le sens d'avancement que dans le sens opposé.

8. Anneau de centrage suivant la revendication 6, caractérisé en ce que l'évidement (74a) est réalisé sous une forme dissymétrique et en ce que, dans le sens de déplacement du suiveur de came (68) qui correspond à la déviation des mâchoires de centrage (56) dans le sens d'avancement, il possède un bord plus élevé que dans le sens opposé.

FIG.1

FIG.2

FIG.3

11

FIG.4

FIG.5

FIG.6

FIG.7

FIG.8

FIG.9